Europäisches Patentamt

European Patent Office

Office européen des brevets

(11) Publication number: **0 261 731 B1**

# EUROPEAN PATENT SPECIFICATION

(45) Date of publication of patent specification: **16.03.94**   (51) Int. Cl.5: **G01S 15/89**, G01S 7/52, G01F 23/24

(21) Application number: **87201775.1**

(22) Date of filing: **16.09.87**

(54) **Method and device for measuring the depth of the bottom under a water surface.**

(30) Priority: **16.09.86 BE 905441**
**03.03.87 BE 8700265**

(43) Date of publication of application:
**30.03.88 Bulletin 88/13**

(45) Publication of the grant of the patent:
**16.03.94 Bulletin 94/11**

(84) Designated Contracting States:
**BE DE ES FR GB IT NL SE**

(56) References cited:
**DE-A- 2 040 313**
**US-A- 3 777 177**
**US-A- 4 000 646**
**US-A- 4 104 608**
**US-A- 4 169 377**

(73) Proprietor: **EUROSENSE HOVERSOUNDING N.V.**
**Oude Stationstraat 144**
**B-8700 Tielt(BE)**

(72) Inventor: **Grobben, Alfons Jakob**
**Leeuwerikkenstraat 84**
**B-3030 Heverlee(BE)**
Inventor: **Claeys, Frans Maurice**
**Gentstraat 78**
**B-8760 Meerlebeke(BE)**

(74) Representative: **van der Beek, George Frans, Ir. et al**
**Nederlandsch Octrooibureau**
**Scheveningseweg 82**
**P.O. Box 29720**
**NL-2502 LS 's-Gravenhage (NL)**

EP 0 261 731 B1

## Description

The invention relates to a method for measuring the depth of the bottom below a water surface, in particular of the seabed, through echo sounding from a vessel moving over the surface in the water, wherein, by means of a transmitter-receiver unit of ultrasonic waves, fitted on the vessel and equipped with a measuring probe, pulses of such waves are transmitted at known times and known speed to said bottom and the pulses reflected by the latter are received by means of this unit, wherein the time difference between transmission and receiving of the same pulse is measured and recorded as an output signal of said unit, wherein the depth of the measuring probe of the transmitter-receiver unit varies relative to the water surface during carrying out of the measurements, and this varying depth is continously measured to form a corresponding electrical signal.

The invention also relates to a device for carrying above method, which is provided with a transmitter-receiver unit for ultrasonic waves, mounted on a vessel, and equipped with a measuring probe which transmits ultrasonic pulses of such waves to the bottom and receives them after reflection, wherein a depth sensor is provided to be fitted to the vessel to determine the depth of the measuring probe with respect to the water surface.

It is known in practice to start from a fixed depth of the measuring probe of the transmitter-receiver unit. The value of this fixed depth is set, for example, by means of thumb wheel switches or a potentiometer on the transmitter-receiver unit. This means that in the echogram the position of the transmitted pulse is then displaced over a distance corresponding to the fixed depth. It is, however, a problem with the use of this known transmitter-receiver unit that a slowly varying depth of the measuring probe cannot be set, which makes the use of such a unit in particular with moving or smaller vessels, such as a vessel with air cushion, practically impossible, in view of the constantly varying height of such a vessel. One can in addition use a depth sensor which measures the distance of the measuring probe to the water surface. Due to the waves, mostly rapid waves, always present on the sea, the measured values are then disturbed by interference.

The invention which is defined in claim 1 aims to overcome this problem. This is achieved in a method of the type referred to in the preamble such that said electrical signal is low-pass filtered to eliminate that high frequency part of the electrical signal largely due to rapid waves occurring on the water surface, the filtered electrical signal being added as a correction to the output signal of the transmitter-receiver unit representing the measured time difference, to provide a depth measurement corrected for the changing depth of the probe with respect to the water surface.

The device referred to in the preamble for carrying out the above-mentioned method is further characterized in that the depth sensor is coupled to a low-pass filter to filter out high-frequency signals largely caused by rapid waves occurring on the water surface, that the output signal of the low-pass filter is being added in a summator to the output signal of the transmitter-receiver unit, the output of the summator providing a depth measurement corrected for the depth of the probe with respect to the water surface.

From US-A-4000646 a method and device is also known as indicated in the opening preamble of present text, in which US patent a wave measuring instrument is described for use on a dynamically positioned or tethered floating vessel in order to monitor wave height, wave period and vertical heave of a vessel as it responds to waves, swell and currents. The instrument comprises a measuring probe in a substantially submerged position to record the distance between instrument and ocean floor as the vessel heaves. A second mesuring means or depth sensor automatically measures and records the normally varying distance between instrument and surface of the water.

In the known method and device it is also possible to use a heave compensator, which is fitted on the vessel and equipped with an accelerometer, and which is placed on an associated gyroscopic platform for the measurement of relatively rapid up and down displacements of the vessel. The output signal of the accelerometer is then doubly integrated in an electric circuit, in order to add to the transmitter-receiver unit a varying depth or profundity correction value corresponding to the up and down movements which correspond with a leading or lagging transmitted pulse.

In such an arrangement the problem is that the heave compensator, apart from providing useful information on the rapid up and down movements, gives incorrect information due to the slanting of the gyroscopic platform on which the accelerometer is placed, and which is due to the effect of the horizontal accelerations on the gyroscopic platform, for example when the vessel makes a turn. These horizontal accelerations ocurring on every change of course made by the vessel are the reason why the gyroscopic platform deviates from its horizontal position. In order to compensate for this deviation produced by these movements of the gyroscopic platform relative to the horizontal, a feedback on the double integration is introduced. However, this feedback not only affects the said deviation, but also introduces a slow decay, sometimes of minutes, in the integrated signal of the heave compensator. This decay is not connected with the vertical up and down movement of the vessel, but is caused by the sloping of the gyroscopic platform.

In another embodiment on the method according to the invention, the decay with low frequency caused by this compensation is filtered out of the integrated signal.

The device for carrying out this embodiment of the method is characterized in that disposed in series with the output of the heave compensator is a high-pass filter to filter out the low-frequency decay caused by the compensation in the integrated signal of the heave compensator, and the output signal of the high-pass filter is added in the summator to the output signal of the transmitter-receiver unit and of the low-pass filter of the depth sensor.

A delay element can advantageousoly be incorporated in the output circuit of the transmitter-receiver unit, with a delay which is in principle equal to the delay produced by the high-pass and low-pass filters in the signals carried by them.

Other features and advantages of the invention will emerge from the description below of a special embodiment of the method and device according to the invention; this description is merely given as an example and does not limit the scope of the application for protection; the reference numbers used below relate to the figures attached hereto.

Fig. 1 is a schematic representation of a known echo sounder.

Fig. 2 is a schematic representation of an echogram which can be obtained by means of this echo sounder.

Fig. 3 is a schematic representation of a slightly corrected echogram which can be obtained by means of this same echo sounder.

Fig. 4 is a schematic representation of an echogram which was carried out by means an echo sounder with varying depth under the water surface.

Fig. 5 is a schematic representation of an accelerometer placed on a gyroscopic platform in the horizontal position.

Fig. 6 is a similar schematic representation of this accelerometer placed on a gyroscopic platform in a sloping position.

Fig. 7 is a schematic representation of an echogram in which the effect of the sloping position of the accelerometer is shown.

Fig. 8 is a schematic representation of a device according to a specific embodiment of the invention.

Fig. 9 is a schematic representation of a part of the device according to the invention.

Fig. 10 is a schematic representation of an electrical circuit in which the part according to Fig. 9 is connected.

Fig. 11 is a graph of the effect of relatively rapid up and down movements of the water surface on the measured results obtained.

Fig. 12 is a schematic representation of a low-pass filter used in the device according to the invention.

Fig. 13 is a graph similar to that of Fig. 11, showing the measured results after filtering out of the signals with relatively high frequency which are obtained due to the above-mentioned rapid up and down movements of the water surface.

Fig. 14 is a graph of the effect of a deviation on the measurements of the heave compensator due to a sloping of the gyroscopic platform on which it is placed.

Fig. 15 is a schematic representation of a high-pass filter used with this heave compensator.

Fig. 16 is a graph, similar to that of Fig. 14, of the measured results of the heave compensator after filtering out of the signals with relatively low frequency which have occurred due to a sloping of the gyroscopic platform.

Fig. 17 is a schematic representation of an electronic circuit of a heave compensator.

In these figures, the same reference numbers refer to the same or similar elements.

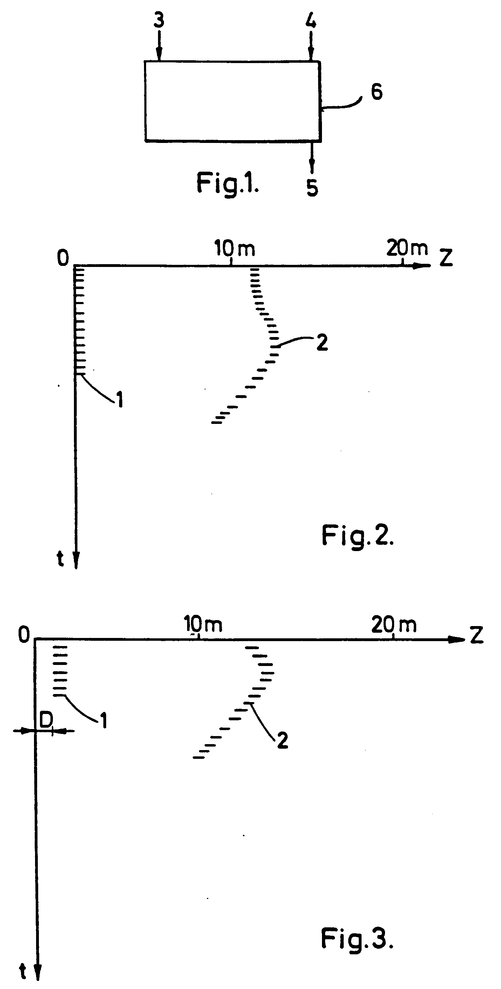

A classic echo sounding system, such as that shown in Fig. 1, determines the depth of the bottom with ultrasonic waves: for a known speed of the ultrasonic wave in the water, the distance is calculated from the time difference between transmission of a pulse 1 and receiving of its echo 2 (see Fig. 2). The acoustic measuring probe, the so-called transducer, which transmits an ultrasonic signal (normally 33 KHz or 210 KHz) and receives back the reflected signal, is in fact part of the transmitter-receiver unit and is usually set up at a fixed distance below a hydrographic measuring vessel. The signals from this measuring probe are recorded by this transmitter-receiver unit or echo sounder 6 on paper in the form of an echogram such as that shown in Fig. 2.

With the frequency of the transmission of pulses (usually 10 pulses per second) both the transmitted pulse 1 and its echo 2 are shown by a short horizontal line. The length of each line indicates a measurement of the transmission time of each pulse. The transmitted pulse 1 coincides with the zero line (Z = 0) of the depth axis, while the echo indicates the corresponding distance between measuring probe and bottom. In fact the Z axis is nothing more than a transformed time axis: the further the echo is displaced to the right along the Z axis, the greater is the time between the transmitted pulse and its echo, and thus the greater is the distance between measuring probe and bottom.

In order to relate the depth values to an average water surface level, two inputs are provided with an echo sounder of the type shown in Fig. 1. Through input 3, it is possible, by means of a setting element, for example a potentiometer, to indicate a fixed depth (e.g. 1-2 or more metres) of the measuring probe, which is expressed by a displacement of both the transmitted pulse 1 and its echo 2 over a fixed value D along the Z axis (Fig. 3), which corresponds to a delay of the transmitted pulse 1.

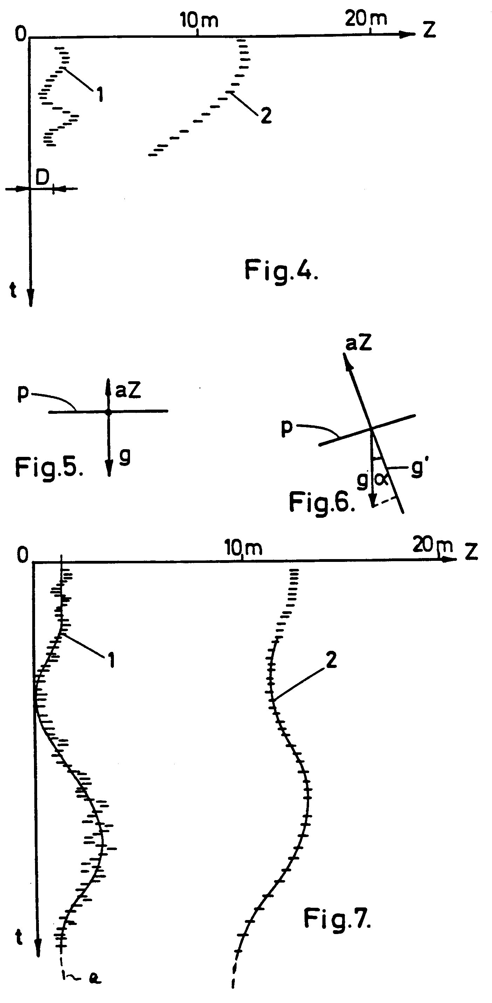

Finally, through input 4 (Fig. 1), a signal from the heave compensator can carry out the necessary corrections due to the rapid up and down movements of the measuring probe. In Fig. 4, the transmitted pulse 1 is displaced over a variable $\Delta Z$ value along the Z axis, which corresponds to a leading or lagging transmitted pulse 1.

The displacement of the transmitted pulse 1 compensates for the up and down movements of the measuring probe. The recorded echo indicates the bottom depth relative to an average surface water or sea level. The recorded depth is also available in a digital manner at output 5 of the echo sounder 6.

Two comments must, however, be made as regards the processing with a classic echo sounder 6 such as that shown in Fig. 1. First, it is not possible to set a slowly varying depth of the measuring probe, which makes it impossible to use such equipment in a greatly moving vessel, for example one with air cushioning, given the continuously variable (air cushion) level. Secondly, apart from the useful information on the rapid up and down movements, one obtains from a heave compensator incorrect information, which is due to the sloping of the gyroscopic platform on which the accelerometer is placed, and which is mostly due to the effect of horizontal accelerations on the gyroscopic platform. These horizontal accelerations which occur with every change of course by the vessel are the reason why the gyroscopic platform deviates from its horizontal position.

Fig. 5 gives the ideal horizontal position of the gyroscopic platform p. The accelerometer measures only the acceleration at right angles to gyroscopic platform p which is represented by aZ on the Z axis. This acceleration is thus vertical if the platform is horizontal and can take place either upwards or downwards. Fig. 5 shows an upward acceleration by way of example. There is automatic compensation of the constant acceleration g of gravity.

Fig. 6 gives the effect of this gyroscopic platform p not lying horizontal. The component $g'$ of the acceleration of gravity measured by the accelerometer is g cos $\alpha$, while this is again compensated for by the constant value g. There is thus a deviation, called "offset", on the accelerometer which is proportional to the angle $\alpha$. This deviation necessitates a correction of the signal coming from the accelerometer during the double integration of the acceleration indicated by the latter to determine the real vertical position.

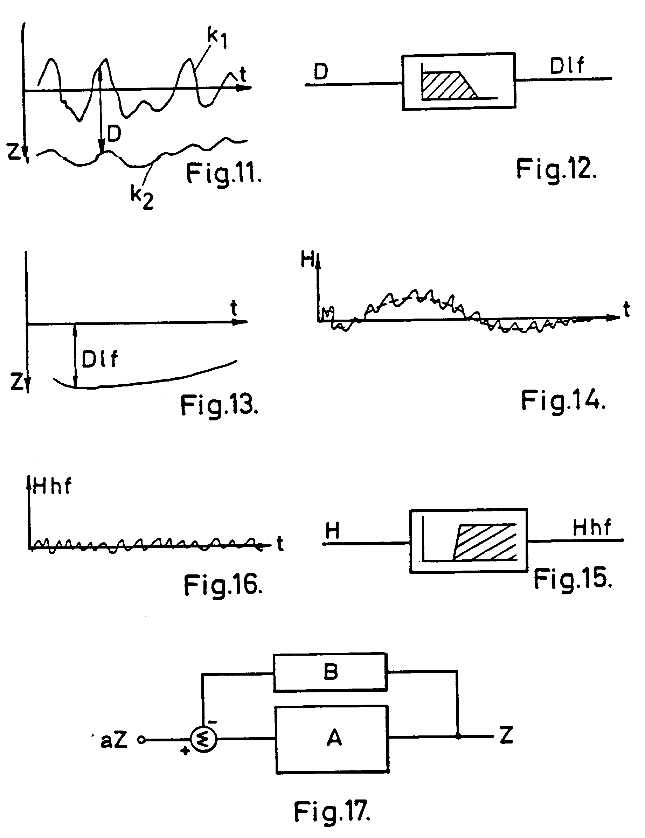

Fig. 17 illustrates a DC feedback circuit B which, together with a double integrator A, forms the electronic part of the heave compensator.

As can already be deduced from the above, the purpose of this feedback circuit is the compensation of the unavoidable offset of the signal produced by the heave compensator. The consequence of this feedback circuit is that in this way not only is the information on the slow up and down movements of the vessel lost, but it also results in a slow decay, sometimes of minutes, of the signal of the heave compensator. This decay is not connected with the vertical up and down movement of the vessel, but is thus caused by the sloping of the gyroscopic platform.

Fig. 7 shows the effect of this low-frequency decay (i.e. curve a) and the incorrect depth recording of sometimes more than 2 m which this causes on the echogram. In this Fig. 7 the displacement of the transmitted pulse along the Z axis can be attributed to the up and down movement of the vessel and the undesirable decay (curve a) of the signal of the heave compensator caused by the electronic correction system.

The use of the heave compensator in small measuring boats or vessels moving on air cushions is out of the question for this reason, in view of their virtually constant mobility on the water surface.

The object of the invention is now to eliminate these disadvantages and to propose a method and device which even permit the carrying out of measurements from vessels moving greatly on the water surface, without the above-mentioned phenomena having any appreciable influence on the measured results obtained on the echograms shown.

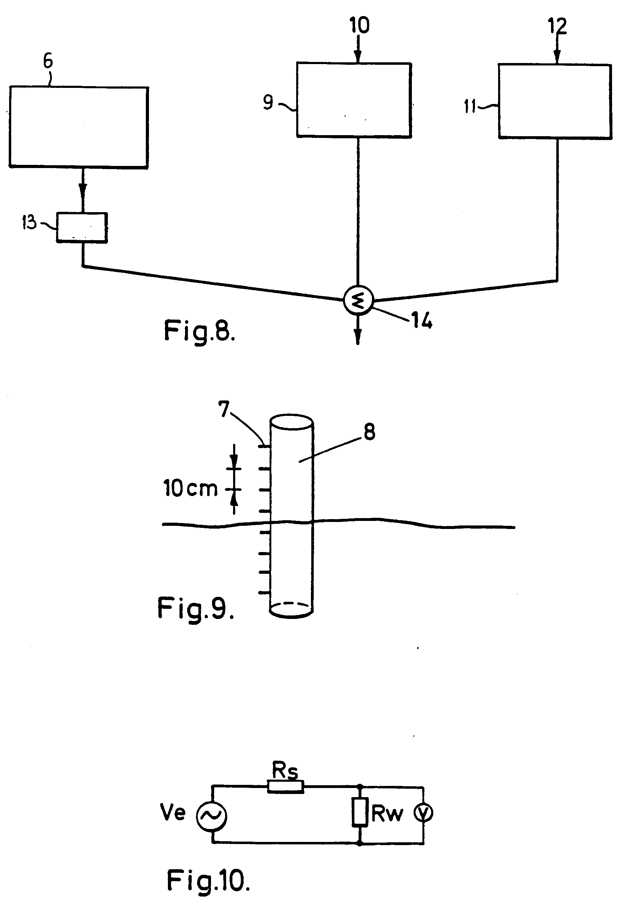

For this, you are more specifically referred to Fig. 8, which illustrates a special embodiment of the method and device which make it possible to overcome the two above-mentioned specific shortcomings of the existing method and device, namely the absence of input of a slowly varying depth, and the presence of the disturbing low-frequency decay on the signal of the heave compensator.

The signals of a depth meter measure the movements of the transducer(s) relative to the current water surface. This can take place by means of, for example, an ultrasonic transducer which is placed on the deck and measures the distance of the deck of the vessel from the water surface, or by means of a depth sensor such as that proposed in Fig. 9. This depth sensor can in a preferred embodiment be combined with the measuring probe to form an integral unit.

This depth sensor comprises a series of feelers, in the form of pins 7 which are fitted with a certain spacing, for example 10 cm, above each other on a vertically adjustable hydrodynamically shaped arm 8, which is partially immersed in the water and is fixed to the vessel. These pins are preferably formed by electrically insulated, non-rusting bars which contact the water only with their free end. An alternating voltage is applied to each pin, as shown schematically in Fig. 10. In this figure, Rs is a series resistance between an alternating voltage source Ve and a variable resistance Rw which is caused by the water and the pin in question. The voltage over each pin, with constant alternating voltage source Ve and series resistance Rs, depends on the contact which this pin makes with the water and the conductivity of the water, for example fresh or salt water. An electronic circuit which is not shown compares, according to the invention, the different voltages over each pin with a reference voltage.

The reference voltage is one to two times the minimum voltage measured over all the pins and is automatically adapted as a function of time during the constant sampling of this minimum voltage. The depth sensor is in this way made independent of the salt content in the water.

Pins hanging in the air or any sprayed by the water will have a voltage which is greater than the reference voltage. The pins which are immersed in the water have a lower voltage than the reference voltage.

The pins are scanned electronically at regular intervals and the number of pins being in the water are counted. Through digital signal processing (low-pass filter), one can then deduce how many pins on average there are in the water. In this way the slow movements of the transmitter-receiver unit are measured with periods greater than, say, 10 to 20 seconds. (The rapid movements of the transmitter-receiver unit are measured with the heave compensator, as already stated).

Due to the waves always present on the sea, the measured values are usable only in the low-frequency region, which is why the high-frequency signals have to be eliminated using a low-pass filter. This is clearly illustrated by Figs. 11 and 13.

Fig. 11 shows, along the Z axis, the measured level of the water surface, the top curve $k_1$ of the depth sensor indicating the effect of the waves, and the curve $k_2$ showing the position of the transmitter-receiver unit (the measuring probe), so that D indicates the current depth of this unit.

Through use of a low-pass filter such as that shown in Fig. 12 on the values D recorded by the said unit, the slow changes in depth of the transmitter-receiver unit (measuring probe) (Dlf) are retained. These values are then shown on the graph in Fig. 13, in which the signals from the waves are filtered out.

In a similar way, according to the invention, the signal H from the heave compensator, which is plotted as a function of time on the graph in Fig. 14, is fed to a high-pass filter of the type shown in Fig. 15.

Fig. 16 then illustrates the effect of this filtering on this signal in which Hhf indicates the actual rapid up and down movements of the vessel.

The signal obtained at the output of the heave compensator is thus relieved of the effect of the slow decay which is due to this heave compensator with inbuilt correction itself.

In order to ensure that the two above-mentioned filter actions take place with linear phase, advantageous use is made of digital filters, such as, for example, Hamming filters, so that the remaining signal remains virtually undeformed. These digital filters involve a time delay before the signal can be filtered: in other words, in order to calculate the output at a moment t, the input over time $t\pm\Delta T$ must be known.

In this way, according to the invention, the signals coming from the depth sensor and those coming from the heave compensator are digitally filtered and added to the signals of the echo sounder, but after having delayed the latter.

This is shown schematically in Fig. 8. The signal 10 of the depth sensor is added to the input of a digital low-pass filter 9, while the signal 12 coming from the heave compensator is added to a digital high-pass filter 11. The signal from the transmitter-receiver unit, which is thus processed by the echo sounder 6, is delayed in 13 for the same period of time $\Delta T$ as that which is caused by the filters 9 and 11, in order then to be added in a summator 14 to the signals obtained at the outputs of these filters.

This delay and these digital filters 9 and 11 are programmed using a microprocessor. This microprocessor also adds the depth to the filtered heave compensator signal and depth sensor signal. The depth recordings thus obtained can also be added to standard hydrographic packets for plotting the measured data.

## Claims

1.    Method for measuring the depth of the bottom below a water surface, in particular of the seabed, through echo sounding from a vessel moving over the surface in the water, wherein, by means of a transmitter-receiver unit of ultrasonic waves, fitted on the vessel and equipped with a measuring probe, pulses of such waves are transmitted at known times and known speed to said bottom and the pulses reflected by the latter are received by means of this unit, wherein the time difference between transmission and receiving of the same pulse is measured and recorded as an output signal of said unit, wherein the depth of the measuring probe of the transmitter-receiver unit varies relative to the water surface during carrying out of the measurements, and this varying depth is continuously measured to form a corresponding electrical signal, characterized in that said electrical signal is low-pass filtered to eliminate that high-frequency part of the electrical signal largely due to rapid waves occurring on the water surface, the filtered electrical signal being added as a correction to the output signal of the transmitter-receiver unit representing the measured time difference, to provide a depth measurement corrected for the changing depth of the probe with respect to the water surface.

2. Method according to claim 1, characterized in that signals produced as a result of the varying depth of the measuring probe of the transmitter-receiver unit are applied to a low-pass filter and the remaining low-frequency signals are added to the signals produced by the transmitter-receiver unit during the carrying out of the depth measurements.

3. Method according to one of the claims 1 or 2, where use is made of a heave compensator which is fitted on the vessel and equipped with an accelerometer, and which is placed on an associated gyroscopic platform for measuring relatively rapid up and down movements of the vessel, while in an electrical circuit of the heave compensator double integration is carried out of the electrical signal which is produced by the accelerometer when it undergoes an up and down acceleration, and a feedback circuit across this double integration is provided in order to compensate for a deviation on this signal, which arises on account of a movement of the gyroscopic platform relative to the horizontal plane, characterized in that the output signal of the heave compensator is high-pass filtered to eliminate the decay with low frequency of the integrated signal caused by this compensation.

4. Method according to claim 1, characterized in that the signal from the varying depth of the measuring probe is digitally filtered and then added to the output signal of the transmitter-receiver unit which is first been delayed for a particular time which virtually corresponds to the delay which occurs as a result of the above-mentioned digital filtration.

5. Method according to claim 3, characterized in that the output signal of the heave compensator and the signal from the varying depth of the measuring probe are digitally filtered and then added to the output signal of the transmitter-receiver unit which is first been delayed for a particular time which virtually corresponds to the delay which occurs as a result of the above-mentioned digital filtration.

6. Device for carrying out the method according to claim 1, which is provided with a transmitter-receiver unit for ultrasonic waves, mounted on a vessel, and equipped with a measuring probe (6) which transmits ultrasonic pulses of such waves to the bottom and receives them after reflection, wherein a depth sensor (8) is fitted to the vessel to determine the depth of the measuring probe (6) with respect to the water surface, characterized in that the depth sensor (8) is coupled to a low-pass filter (9) to filter out high-frequency signals largely caused by rapid waves occurring on the water surface, that the output signal of the low-pass filter is added in a summator (14) to the output signal of the transmitter-receiver unit, the output of the summator providing a depth measurement corrected for the depth of the probe with respect to the water surface.

7. Device according to claim 6, characterized in that the depth sensor (8) sticks partially into the water and over a specific height is provided with a series of feelers (7) which extend at regular intervals from each other, and each of which is connected to a series resistor in an electrical circuit, in such a way that a resistance arises in this circuit and changes when the feeler in question is immersed in the water, the voltage at the various feelers being compared with a reference voltage, as a result of which the number of immersed feelers can be determined.

8. Device according to claim 6 or 7, provided with a heave compensator, equipped with an accelerometer, and a associated gyroscopic platform for measurement of relatively rapid up and down movements of the vessel, while there is double integration of the electrical signal produced by the accelerometer and a feedback across the integration is provided to compensate for the deviation in the integrated signal caused by movements of the gyroscopic platform in the horizontal plane, <u>characterized</u> in that a high-pass filter (11) is disposed in series with the output of the heave compensator in order to filter out the low-frequency decay caused in the integrated signal of the heave compensator by the compensation, and the output signal of the high-pass filter (11) is added in the summator (14) to the output signal of the transmitter-receiver unit and of the low-pass filter (9) of the depth sensor (8).

9. Device according to claim 6 or 8, <u>characterized</u> in that disposed in the output circuit of the transmitter-receiver unit is a delay element (13) having delay essentially equal to the delay caused by the high-pass and low-pass filters in the signals fed through them.

**Patentansprüche**

1. Verfahren zur Messung der Tiefe des Grundes unter einer Wasseroberfläche, insbesondere des Meeresgrundes, durch Echolotung von einem Fahrzeug, das sich über die Oberfläche im Wasser bewegt, bei dem durch eine Ultraschallwellen-Sender-/Empfängeranlage, die an dem Fahrzeug befestigt und mit einer Meßsonde ausgestattet ist, Impulse solcher Wellen zu bekannten Zeiten und bei bekannter Geschwindigkeit zum Boden ausgesendet und die von diesem reflektierten Impulse durch diese Anlage empfangen werden, wobei die Zeitdifferenz zwischen Aussendung und Empfang desselben Impulses gemessen und als Ausgangssignal der Anlage aufgezeichnet wird, wobei sich die Tiefe der Meßsonde der Sender-/Empfängeranlage in bezug auf die Wasseroberfläche während der Durchführung der Messungen verändert und diese sich verändernde Tiefe kontinuierlich gemessen wird, um ein entsprechendes elektrisches Signal zu bilden, <u>dadurch gekennzeichnet</u>, daß das elektrische Signal tiefpaßgefiltert wird, um den hochfrequenten Teil des elektrischen Signals, der im wesentlichen Folge schneller Wellen ist, die auf der Wasseroberfläche auftreten, zu eliminieren, daß das gefilterte elektrische Signal als Korrektiv dem Ausgangssignal der Sender-/Empfängeranlage hinzugefügt wird, das der gemessenen Zeitdifferenz entspricht, um eine für die sich verändernde Tiefe der Sonde in bezug auf die Wasseroberfläche korrigierte Tiefenmessung zu liefern.

2. Verfahren nach Anspruch 1, <u>dadurch gekennzeichnet</u>, daß Signale, die als Ergebnis der sich verändernden Tiefe der Meßsonde der Sender-/Empfängeranlage erzeugt werden, auf einen Tiefpaßfilter gegeben werden und die verbleibenden Niederfrequenzsignale den Signalen hinzugefügt werden, die durch die Sender-/Empfängeranlage während der Durchführung der Tiefenmessungen erzeugt werden.

3. Verfahren nach einem der Ansprüche 1 oder 2, bei dem ein Hubkompensator verwendet wird, der an dem Fahrzeug befestigt, mit einem Beschleunigungsmesser ausgestattet und auf einer zugehörigen Kreiselplattform angeordnet ist, um relativ schnelle Auf- und Abbewegungen des Fahrzeugs zu messen, wobei in einer elektrischen Schaltung des Hubkompensators eine doppelte Integration des elektrischen Signals durchgeführt wird, das durch den Beschleunigungsmesser erzeugt wird, wenn er eine Auf- und Abbeschleunigung unternimmt, und über der Doppelintegration eine Rückkopplungsschaltung angeordnet ist, um eine Abweichung dieses Signals, die im Falle einer Bewegung der Kreiselplattform in bezug auf die horizontale Ebene auftritt, zu kompensieren, <u>dadurch gekennzeichnet</u>, daß das Ausgangssignal des Hubkompensators hochpaßgefiltert wird, um ein durch diese Kompensation verursachtes niederfrequentes Ausschwingen des integrierten Signals zu beseitigen.

4. Verfahren nach Anspruch 1, <u>dadurch gekennzeichnet</u>, daß das Signal der sich verändernden Tiefe der Meßsonde digital gefiltert und dann dem Ausgangssignal der Sender-/Empfängeranlage hinzugefügt wird, das zuvor um eine bestimmte Zeit verzögert wurde, die virtuell der als Folge der oben genannten digitalen Filterung auftretenden Verzögerung entspricht.

5. Verfahren nach Anspruch 3, <u>dadurch gekennzeichnet</u>, daß das Ausgangssignal des Hubkompensators und das Signal der sich verändernden Tiefe der Meßsonde digital gefiltert und dann dem Ausgangssignal der Sender-/Empfängeranlage hinzugefügt werden, das zuvor um eine bestimmte Zeit verzögert wurde, die virtuell der als Folge der oben genannten digitalen Filterung auftreteneden Verzögerung entspricht.

6. Vorrichtung zur Ausführung des Verfahrens nach Anspruch 1, die eine Sender-/Empfängeranlage für Ultraschallwellen aufweist, die an einem Fahrzeug montiert und mit einer Meßsonde (6) ausgestattet ist, die Ultraschallimpulse solcher Wellen zum Boden aussendet und diese nach Reflektion empfängt, wobei ein Tiefensensor (8) an dem Fahrzeug befestigt ist, um die Tiefe der Meßsonde (6) in bezug auf die Wasseroberfläche zu bestimmen, <u>dadurch gekennzeichnet</u>, daß der Tiefensensor (8) mit einem Tiefpaßfilter (9) gekoppelt ist, um hochfrequente Signale, die hauptsächlich durch schnelle Wellen verursacht werden, die auf der Wasseroberfläche auftreten, auszufiltern, daß das Ausgangssignal des Tiefpaßfilters in einem Summierer (14) dem Ausgangssignal der Sender-/Empfängeranlage hinzugefügt wird, wobei der Ausgang des Summierers eine für die Tiefe der Sonde in bezug auf die Wasseroberfläche korrigierte Tiefenmessung liefert.

7. Vorrichtung nach Anspruch 6, <u>dadurch gekennzeichnet</u>, daß der Tiefensensor (8) teilweise in das Wasser gesteckt und über eine bestimmte Höhe mit eine Reihe von Fühlern (7) ausgestattet ist, die sich in regelmäßigen Abständen voneinander erstrecken und von denen jeder mit einem Serienwiderstand in einer elektrischen Schaltung so verbunden ist, daß in der Schaltung ein Widerstand auftritt und sich ändert, wenn der betreffende Fühler in das Wasser eintaucht ist, wobei die Spannung an den verschiedenen Fühlern mit einer Referenzspannung verglichen wird, woraus die Anzahl der eingetauchten Fühler bestimmt werden kann.

8. Vorrichtung nach Anspruch 6 oder 7, die mit einem Hubkompensator ausgerüstet ist, der mit einem Beschleunigungsmesser und einer zugeordneten Kreiselplattform zur Messung von relativ schnellen Auf- und Abbewegungen des Fahrzeugs ausgestattet ist, wobei eine Doppelintegration des elektrischen Signals, das durch den Beschleunigungsmesser erzeugt wird, und eine Rückkopplung über die Integration erfolgt, um die Abweichung in dem integrierten Signal, die durch Bewegungen der Kreiselplattform in der horizontalen Ebene verursacht werden, zu kompensieren, <u>dadurch gekennzeichnet</u>, daß ein Hochpaßfilter (11) in Serie zum Ausgang des Hubkompensators angeordnet ist, um das niederfrequente Ausschwingen, das durch die Kompensation in dem integrierten Signal des Hubkompensators verursacht wird, auszufiltern und daß das Ausgangssignal des Hochpaßfilters (11) in dem Summierer (14) dem Ausgangssignal der Sender-/Empfängeranlage und dem des Tiefpaßfilters (9) des Tiefensensors (8) hinzugefügt wird.

9. Vorrichtung nach Anspruch 6 oder 8, <u>dadurch gekennzeichnet</u>, daß in der Ausgangsschaltung der Sender-/Empfängeranlage ein Verzögerungselement (13) angeordnet ist, das eine Verzögerung hat, die im wesentlichen gleich der Verzögerung ist, die durch die Hoch- und Tiefpaßfilter in den durch sie geleiteten Signale verursacht werden.

## Revendications

1. Procédé de mesure de la profondeur du fond sous la surface de l'eau, en particulier du fond de la mer, par sondage avec écho depuis un navire se déplaçant au-dessus de la surface de l'eau dans lequel, grâce à un appareil émetteur-récepteur d'ondes ultrasonores placé sur le navire et équipé d'une sonde de mesure, on envoie sur ledit fond des impulsions de telles ondes à des instants connus et à vitesses connues et les impulsions réfléchies par ce dernier sont recueillies au moyen de cet appareil, dans lequel on mesure le laps de temps entre l'émission et la réception d'une même impulsion et on l'enregistre en tant que signal de sortie dudit appareil, dans lequel la profondeur de la sonde de mesure de l'appareil émetteur-récepteur varie par rapport à la surface de l'eau en cours de mesure et cette profondeur variable est mesurée en continu pour donner un signal électrique correspondant, caractérisé en ce que ledit signal électrique est filtré avec un filtre passe-bas pour éliminer la composante haute fréquence du signal électrique essentiellement due aux ondes rapides se produisant à la surface de l'eau, le signal électrique filtré étant ajouté en tant que correction au signal de sortie de l'appareil émetteur-récepteur représentant le laps de temps mesuré pour donner une mesure de profondeur corrigée en fonction de la profondeur variable de la sonde par rapport à la surface de l'eau.

2. Procédé selon la revendication 1, **caractérisé** en ce que des signaux produits suite à une variation de profondeur de la sonde de mesure de l'appareil émetteur-récepteur sont envoyés à un filtre passe-bas et les signaux basse fréquence qui restent sont ajoutés aux signaux produits par l'appareil émetteur-récepteur pendant les mesures de profondeur.

3. Procédé selon l'une des revendications 1 ou 2, dans lequel on utilise un compensateur de houle, placé dans le navire et équipé d'un accéléromètre, et installé sur une plate-forme gyroscopique associée pour mesurer des mouvements ascendants et descendants relativement rapides du navire, tandis que dans un circuit électrique du compensateur de houle s'effectue une double intégration du signal électrique produit par l'accéléromètre qui subit une accélération vers le haut et vers le bas et qu'il existe un circuit de réaction sur cette double intégration pour compenser une déviation de ce signal qui se produit lors d'un mouvement de la plate-forme gyroscopique par rapport au plan horizontal, **caractérisé** en ce que le signal de sortie du compensateur de houle est filtré dans un filtre passe-haut pour éliminer l'affaiblissement aux basses fréquences du signal intégré dû à cette compensation.

4. Procédé selon la revendication 1, **caractérisé** en ce que le signal provenant de la variation de profondeur de la sonde de mesure est filtré numériquement puis ajouté au signal de sortie de l'appareil émetteur-récepteur qui est d'abord retardé d'une durée particulière correspondant virtuellement au retard qui se produit suite à la filtration numérique susmentionnée.

5. Procédé selon la revendication 3, **caractérisé** en ce que le signal de sortie du compensateur de houle et le signal provenant de la variation de la profondeur de la sonde de mesure sont filtrés numériquement puis ajoutés au signal de sortie de l'appareil émetteur-récepteur qui est d'abord retardé d'une durée particulière correspondant virtuellement au retard qui se produit suite à la filtration numérique susmentionnée.

6. Dispositif permettant de mettre en oeuvre le procédé conforme à la revendication 1, qui est pourvu d'un appareil émetteur-transmetteur d'ondes ultrasonores, monté sur un navire et équipé d'une sonde de mesure (6), qui envoie des impulsions ultrasonores de telles ondes sur le fond et les reçoit après réflexion, dans lequel un capteur de profondeur (8) est placé dans le navire pour déterminer la profondeur de la sonde de mesure (6) par rapport à la surface de l'eau, **caractérisé** en ce que le capteur de profondeur (8) est couplé à un filtre passe-bas (9) pour éliminer des signaux haute fréquence essentiellement provoqués par des ondes rapides se produisant à la surface de l'eau, en ce que le signal de sortie du filtre passe-bas est ajouté dans un sommateur (14) au signal de Sortie de l'appareil émetteur-récepteur, le signal de sortie du sommateur donnant une mesure de profondeur corrigée en fonction de la profondeur de la sonde par rapport à la surface de l'eau.

7. Dispositif selon la revendication 6, **caractérisé** en ce que le capteur de profondeur (8) s'enfonce partiellement dans l'eau et est pourvu, sur une hauteur spécifique, d'une série de palpeurs (7) s'étendant à intervalles réguliers les uns des autres et dont chacun est relié à une résistance série dans un circuit électrique de telle manière qu'une résistance se produit dans ce circuit et change lorsque le palpeur en question est immergé dans l'eau, la tension au niveau des différents palpeurs étant comparée à une tension de référence ce qui permet de déterminer le nombre de palpeurs immergés.

8. Dispositif selon la revendication 6 ou 7, pourvu d'un compensateur de houle, équipé d'un accéléromètre, et d'une plate-forme gyroscopique associée pour mesurer des mouvements ascendants et descendants relativement rapides du navire, tandis qu'il se produit une double intégration du signal électrique produit par l'accéléromètre et qu'une boucle de retour sur l'intégration est prévue pour compenser la déviation du signal intégré due aux mouvements de la plate-forme gyroscopique dans le plan horizontal, **caractérisé** en ce qu'un filtre passe-haut (11) est placé en série avec la sortie du compensateur de houle afin d'éliminer l'affaiblissement basse fréquence provoqué dans le signal intégré du compensateur de houle par la compensation et en ce que le signal de sortie du filtre passe-haut (11) est ajouté dans le sommateur (14) aux signaux de sortie de l'appareil émetteur-récepteur et du filtre passe-bas (9) du capteur de profondeur (8).

9. Dispositif selon la revendication 6 ou 8, **caractérisé** en ce qu'un élément à retard (13) est placé dans le circuit de sortie de l'appareil émetteur-récepteur, dont le retard est essentiellement égal au retard provoqué par les filtres passe-haut et passe-bas dans les signaux qui sont envoyés à travers eux.

Fig.1.

Fig.2.

Fig.3.

Fig.4.

Fig.5.

Fig.6.

Fig.7.

Fig.8.

10 cm

Fig.9.

Rs

Ve     Rw

Fig.10.

Fig.11.

Fig.12.

Fig.13.

Fig.14.

Fig.16.

Fig.15.

Fig.17.